# EUROPEAN PATENT SPECIFICATION

(11) **EP 4 272 117 B1**
(45) Date of publication and mention of the grant of the patent: **13.08.2025**
(21) Application number: 22826409.9
(22) Date of filing: 21.11.2022
(51) Int. Cl.: G06K 19/02, G06K 19/06, D04B 1/12, D04B 15/66, D04B 37/02

(54) **METHOD FOR IMPLEMENTING A QR CODE IN WEFT KNITTED FABRIC**
VERFAHREN ZUR IMPLEMENTIERUNG EINES QR-CODES IN EINEM SCHUSSGEWIRK
PROCÉDÉ DE MISE EN OEUVRE D'UN CODE QR DANS UN TISSU TRICOTÉ EN TRAME

(30) Priority: 22.11.2021 IT 202100029408
(43) Date of publication of application: 08.11.2023
(73) Proprietor: Politecnico di Milano, 20133 Milano (IT)
(72) Inventor: VICELLI, Laura, 20133 Milano (MI) (IT); TARANTINO, Lucia Consiglia, 20133 Milano (MI) (IT); SABBIONI, Angelo, 20133 Milano (MI) (IT); MUSANTE, Fulvio, 20133 Milano (MI) (IT); VIGNATI, Giorgio, 20133 Milano (MI) (IT)
(74) Representative: Penza, Giancarlo
(86) International application number: PCT/IB2022/061214
(87) International publication number: WO 2023/089581

(56) References cited:
- WO-A1-2006/045135
- US-A1- 2017 204 543
- US-A1- 2019 382 931
- US-A1- 2019 391 564
- US-A1- 2020 193 251

## Description

### TECHNICAL FIELD OF THE INVENTION

The present invention generally relates to the textile industry.

More particularly, the present invention concerns the implementation of a QR code in a weft knitted fabric,

### PRIOR ART

The QR (Quick Response) code is a two-dimensional code made up of a square matrix, for example of 25x25 small squares (or modules), in which the black squares (modules) are suitably arranged inside a square grid with a white background.

The QR code is used to store information, up to a maximum of 7089 numeric characters or 4296 alphanumeric characters: said information can then be read by an optical reader or also by means of a smartphone provided with a suitable application.

The OR code was invented by Denso Wave, which then made it available to everyone under a free licence.

The QR code was subsequently published as ISO standards (ISO/IEC 18004:2015, ISO/IEC 15415, ISO/IEC 15415:2011, ISO TR 29158 (AIM DPM)), in which parameters such as contrast, light, and the type of optical readers were defined.

In particular, standard ISO/IEC 18004:2015 defines that the minimum printed readable module must have a resolution of 4 dpi x 4 dpi; the same standard defines that optical readers must be able to read the minimum module of 0.1 square millimetres and the standard module of 0.25 square millimetres, in which a certain percentage of shape distortion compared to the ideal square module is accepted.

There are known solutions that implement QR codes on fabric that do not enable a reliable reading of the QR code and cannot be reproduced on an industrial level in knitted fabric so as to be readable with common optical readers or by means of standard applications installed in smartphones or tablets.

Today it is important also to trace the history of a product, for example by applying a label to a clothing item, which, however, had the disadvantage that the label can fade away over time because of the clothing being worn.

US 2019/0391564 A1 discloses to produce a QR code on a fabric that does not have a flat surface. In particular, US 2019/0391564 discloses applying an initial deformation to compensate for the final curved shape of the fabric.

WO 2006/045135 A1 discloses to create a digital image to produce a fibre image in a textile using a textile manufacturing machine.

US 2019/382931 A1 discloses a system to design and manufacture a knit footwear upper or other wearable or non-wearable products.

### SUMMARY OF THE INVENTION

The present invention relates to a method for implementing a knitted QR code as defined in the appended claim 1 and the preferred embodiments thereof described in the dependent claims 2 to 8.

The basic idea is to map (i.e. implement) each square (module) of the desired sample QR code in a respective weft knitted base element defined as a group of stitches having a defined number of courses different from a defined number of wales, thereby compensating for the intrinsic shape of a knit stitch which is not square: this allows to obtain a representation of the QR code in weft knitting that is visually perceived as square and may thus be read by standard optical readers and by standard software applications for smartphones and tablets.

The method for implementing (i.e. producing, or fabricating) the QR code comprises the step a) of generating a sample QR code comprising a plurality of modules having at least two different colours, comprises the step b) of receiving data representative of a weft knitted fabric having interlooped stitches arranged in a matrix comprising a plurality of rows and a plurality of columns, wherein the stitches of each row define a course and the stitches of each column define a wale, comprises the step c) of receiving data representative of a base element comprising a group of stitches having a defined number of courses different from a defined number of wales, and comprises the step d) of implementing (i.e. producing) each module of the plurality of modules of the sample QR code with a respective base element of the weft knitted fabric, thereby implementing the weft knitted QR code with a combination of a plurality of said base elements.

Steps a), b), c) can be carried out by means of a suitable software application running on a processing unit (for example, a microprocessor) of a desktop or laptop computer or of a tablet; step d) can be carried out by means of an artisanal or industrial knitting machine.

Steps b), c), d) can also be carried out by a human user, i.e. without using a computer: in this case step d) can also be carried out by hand using knitting or crochet needles.

In a preferred embodiment, data received in step b) are selected from: type of structure of the knitted fabric, type of yarn, gauge of a knitting machine, yarn count, yarn colour.

The term "structure of the knitted fabric" means a combination of single stitches, which can be of varying type: rib stitch, plain stitch, cable stitch, tubular jacquard, all needles jacquard with striped reverse side, all needles jacquard with 1x1 reverse side, jacquard with float yarn on reverse side.

The Applicant has perceived that the method for implementing a weft knitted QR code in accordance with the present invention ensures a high reading reliability of QR code by common optical readers and also by standard software applications installed in mobile electronic devices, such as, for example, smartphones or tablets.

Furthermore, the method for implementing the QR code according to the invention is reproducible with different contents and the weft knitted QR code can be integrated into a fabric.

Furthermore, the implementation method according to the invention is reproducible at an industrial level in knitting by means of knitting machines.

It is also an object of the present invention a non-transitory computer-readable storage medium as defined in the appended claims 9 and 10.

It is also an object of the present invention a computer program comprising software code portions adapted to carry out steps of the method for implementing a QR code in a knitted fabric according to the invention, when said program is run on at least one computer.

It is also an object of the present invention a knitting machine configured to execute the method for implementing a knitted QR code as defined in the appended claim 11.

It is also an object of the present invention a textile product, in particular a fabric, a clothing item, or a clothing accessory, as defined in the appended claim 12.

### BRIEF DESCRIPTION OF THE DRAWINGS

Additional features and advantages of the invention will become apparent from the description that follows of a preferred embodiment and of the variants thereof, provided by way of example with reference to the appended drawings, in which:
- Figure 1 shows an example of a desired sample QR code;
- Figure 2 shows a QR code in a weft knitted fabric implementing the sample QR code of Figure 1 according to a first embodiment of the invention;
- Figure 3A shows in greater detail, at the top, a portion of the sample QR code if Figure 1 and, at the bottom, the corresponding implementation of the same weft knitted portion in Figure 2, wherein a base element of the weft knitted QR code is highlighted;
- Figure 3B shows, at the top, another example of a portion of a sample QR code and, at the bottom, the corresponding implementation of the same weft knitted portion, wherein a base element of the weft knitted QR code is highlighted;
- Figure 4 shows a QR code implemented in a weft knitted fabric according to a second embodiment of the invention;
- Figure 5 shows in greater detail a base element of the weft knitted QR code of Figures 2 and 3A.

### DETAILED DESCRIPTION OF THE INVENTION

It should be observed that, in the following description, identical or analogous blocks, components or modules are indicated in the figures with the same numerical references, even if they are shown in different embodiments of the invention.

The weft knitted QR code according to the invention can be integrated directly into a knitted product or it can be produced as a knit and subsequently applied to any other product or manufactured article and it can contain different types of information, such as, for example:
- a link to a website, for example that of the manufacturer of a clothing item or shoes or furniture or automobile components;
- information for tracing the product history;
- the composition and the material the product is made with;
- product maintenance or washing/laundering information.

The weft knitted QR code according to the invention can also be used in fields not strictly connected to textiles.

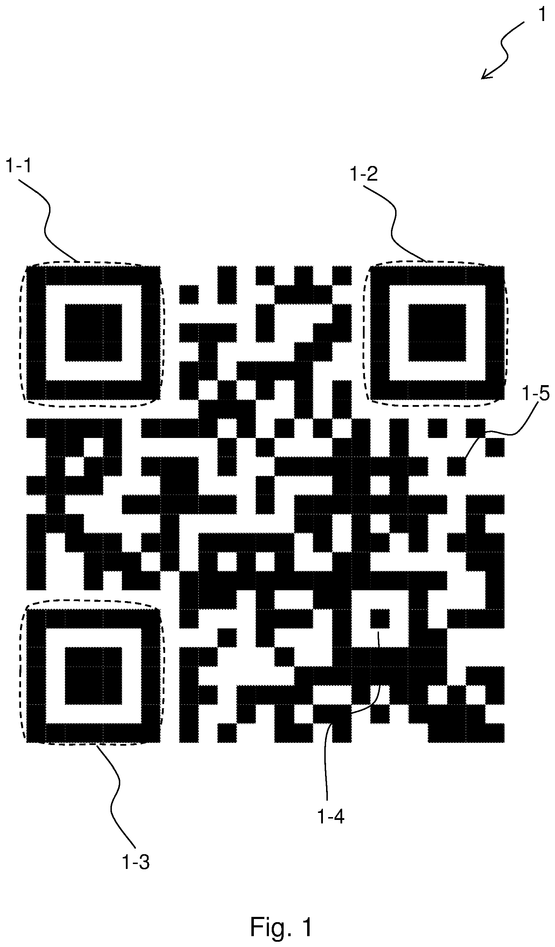

With reference to Figure 1, it shows a sample code 1 of the QR type composed of a square matrix of 25 x 25 modules.

The sample QR code 1 stores a website link.

The term "module" of a QR code means the smallest element of the QR code (i.e. a square of the QR code) which can be read correctly as defined in the above-mentioned ISO/IEC standards, wherein the module is typically black on a white background, but it can also be another colour provided that there is sufficient contrast between the colour of the base module and the background of the QR code: for example, the background is white and the module can be red, green, orange or blue.

A sample QR code 1 with a white background and modules in the colour black (or shades of grey) are considered in Figure 1 for the sake of simplicity.

The sample QR code 1 is thus composed of:
- a combination of black modules on a white background, which store the desired information (for example, a black module 1-5 surrounded by a white background crown is indicated in Figure 1);
- three large square portions 1-1, 1-2, 1-3, which indicate the margins of the sample QR code 1 and are indicated below as "reference portions";
- a smaller square 1-4 for the alignment of the optical reader;
- several portions that indicate the format of the information contained in the sample QR code 1, such as, for example, a website link, a text message, numbers or a combination of text and numbers;
- two portions that contain the version number of the sample QR code 1 (presently comprised between 1 and 40);
- two stripes defining the position of rows and columns;
- format information containing error correction parameters.

It should be observed that, for the purposes of explaining the invention, a QR code with dimensions of 25x25 (which corresponds to version 2) has been considered, but the invention is applicable to all versions of QR codes defined in the ISO/IEC standard, starting from version 1.0 (21x21 modules), version 2 (dimensions of 29x29), version 4 (dimensions of 33x33), version 10 (dimensions of 57x57), version 25 (dimensions of 117x117) and up to version 40 (dimensions of 177x177).

In particular, the Applicant has successfully performed tests using QR codes with dimensions of 25x25 and 29x29, also customised with logos of additional colours, customised with reference portions 1-1, 1-2, 1-3 not necessarily square in shape, produced in different colours and with various types of yarn.

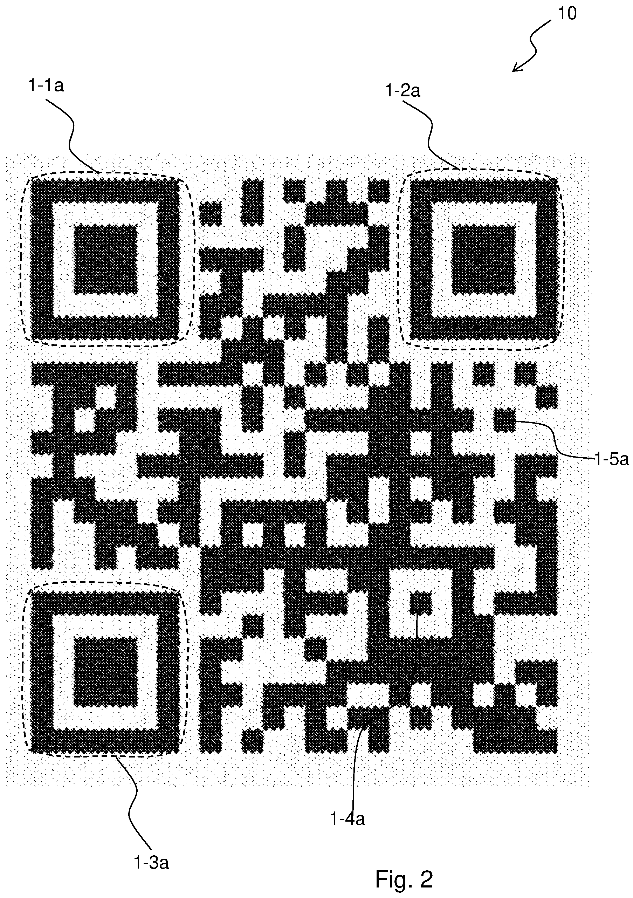

With reference to Figure 2, it shows a QR code 10 on a weft knitted fabric according to a first embodiment of the invention, wherein the weft knitted QR code 10 implements the sample QR code 1 in Figure 1.

The weft knitted QR code 10 thus stores the same website link as the sample QR code 1.

The weft knitted QR code 10 can be integrated directly into the product (for example, in a portion of a clothing item or of car seat upholstery) or it can be separate from the product and subsequently attached to the product (for example, the weft knitted QR code 10 could be a label that is applied to the product).

A weft knitted fabric comprises a plurality of interlooped stitches arranged in a matrix comprising a plurality of rows and a plurality of columns, wherein the stitches of each row define the courses and the stitches of each column define the wales.

A weft knitting is obtained with a yarn that is interlooped with itself, i.e. each course is knitted with the previous one. This can be obtained using rectilinear knitting machines and circular knitting machines and the interlooping of the yarns is obtained by feeding all the needles of the knitting machine with the same yarn disposed transversely in the fabric, using specific knitting machines in which the yarn folded over itself forms a loop of yarn called a "stitch" when it is linked to the others through the movement of the yarn over the needles: in forming a knit stitch, the needle connects the loop to the preceding one, thereby achieving the continuity of the fabric in a longitudinal direction.

In particular, the weft knitting of the QR code 10 is a jacquard knit, that is, it is obtained with knitting machines capable of using a number of yarns of different colour on the same course and on the same wale, on structures made with one needle bed and structures made with two or more needle beds.

The weft knitted QR code 10 is implemented using a combination of a plurality of base elements, in particular using a matrix of 25 x 25 base elements, each of which is composed of three wales and five courses.

Consequently, the knit dimensions of the QR code 10 are the following:
- number of stitches in each row= 25 base elements x 3 wales per base element (total of 75 wales), to which to add 4 white square elements for each of the two side edges, hence a total of 83 stitches (wales) in each row;
- number of stitches in each column= 25 base elements x 5 courses per base element (total of 125 courses), to which to add 4 white square elements for each of the two edges, upper and lower, hence a total of 133 stitches (courses) in each column.

Therefore the weft knitted QR code 10 is composed of a matrix made up of 75 (or 83) stitches (wales) per row and 125 (or 133) stitches (courses) per column.

It is possible to observe in Figure 2 how the reference portions indicating the margins of the QR code are implemented in a weft knitting:
- the square reference portion 1-1 of the sample QR code 1 is implemented with the reference portion 1-1a of the weft knitted QR code 10;
- the square reference portion 1-2 of the sample QR code 1 is implemented with the reference portion 1-2a of the weft knitted QR code 10:
- the square reference portion 1-3 of the sample QR code 1 is implemented with the reference portion 1-3a of the weft knitted QR code 10.

Furthermore, the alignment square 1-4 of the sample QR code 1 is implemented with the alignment portion 1-4a of the weft knitted QR code 10.

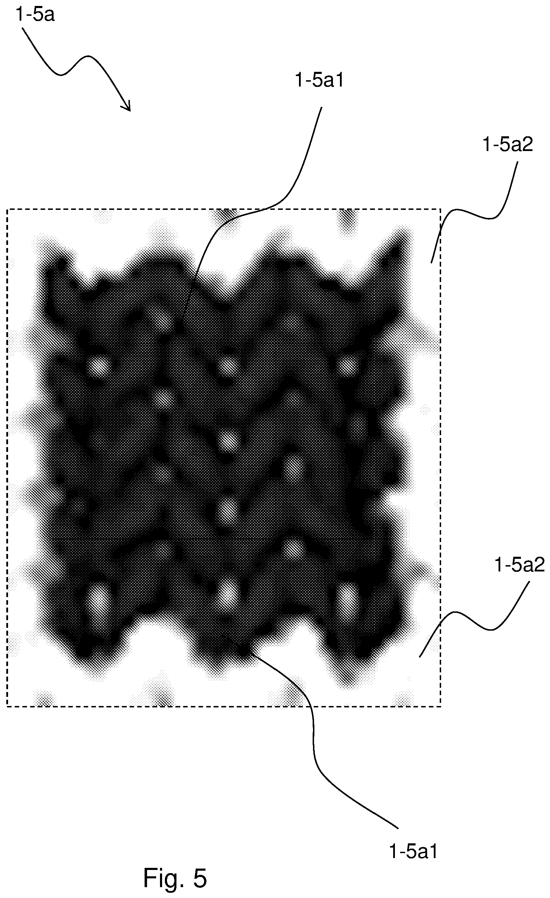

Figure 2 further shows a base element 1-5a that implements the black module 1-5 of the sample QR code 1 in Figure 1, wherein said base element 1-5a will be illustrated in greater detail below with reference to Figure 5.

It is further possible to observe that the weft knitted QR code 10 - and also the single base elements making it up - have a shape that is perceived by the human eye as substantially square and hence the shape is also detected as substantially square by standard QR code optical readers, thus enabling a correct reading of the QR code by common optical readers and also by standard applications installed in smartphones or tablets.

It should be observed, however, that the invention is also applicable to a warp knitted fabric, in which, that is, a series of yarns are interlooped each other: in this case, in knitting machines the individual needles are fed respective yarns, which follow a longitudinal direction relative to the extent of the knitted fabric.

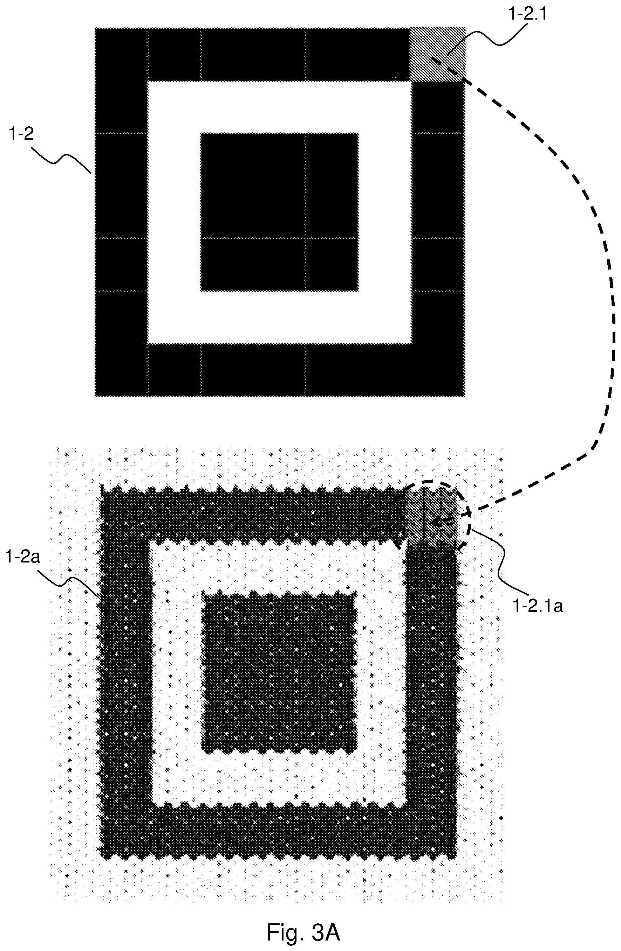

With reference to Figure 3A, it shows, at the top, a portion 1-2 of the QR code in Figure 1 in greater detail and, at the bottom, a respective portion 1-2a of the weft knitted QR code in Figure 2, in which a base element 1-2.1a of the portion 1-2a of the weft knitted QR code 10 is highlighted.

In particular, in the sample QR code 1 the square reference portion 1-2 has been considered, which indicates the top right margin of the QR code 1, wherein said reference portion 1-2 comprises an internal square composed of 3x3 black squares, a square white crown surrounding the black square and a further square black crown surrounding the white crown.

Figure 3A then shows, at the bottom, the reference portion 1-2a of the weft knitted QR code 10 which implements the reference portion 1-2 of the sample QR code 1.

Even more particularly, Figure 3A shows in detail how a black module (small square) 1-2.1 of the sample QR code 1 is mapped (i.e. implemented) into a corresponding base element 1-2.1a of the QR code 10 of the weft knitted fabric.

It is possible to observe that the square black module 1-2.1 of the sample QR code 1 is implemented with the base element 1-2.1a comprising a portion of the weft knitted fabric composed of a group of stitches having three wales (columns) and five courses (rows), i.e. with a rectangular-shaped base element having a predefined number of courses (five) different from a predefined number of wales (three): in this manner it is possible to compensate for the intrinsic shape of a knit stitch, which is never square, and obtain, on the other hand, a representation of the weft knitted QR code 10 with a shape that is visually perceived as square, which thus allows a correct reading by standard optical readers or with standard mobile device applications.

It is further possible to observe that the production of the weft knitted fabric is such to generate a knit structure within the base element 1-2.1a composed of a group (i.e. a plurality) of adjacent "V-shaped" stitches arranged in a matrix of five rows (corresponding to the five courses) and three columns (corresponding to the three wales), thus the base element 1-2.1a overall is composed of a group of 15 adjacent "V-shaped" stitches arranged in several courses: the stitches are adjacent to one another both along the horizontal direction corresponding to each of the five rows, and along the vertical direction corresponding to each of the three columns, so as to form the base element 1-2.1a having a shape that is detected as square (except for the allowed tolerance) by an optical reader.

The previous considerations are similarly applicable in the event that the considered module of the sample QR code is white rather than black: in this case, the base element of the weft knitted fabric is prevalently white in colour and is again composed of three wales and five courses.

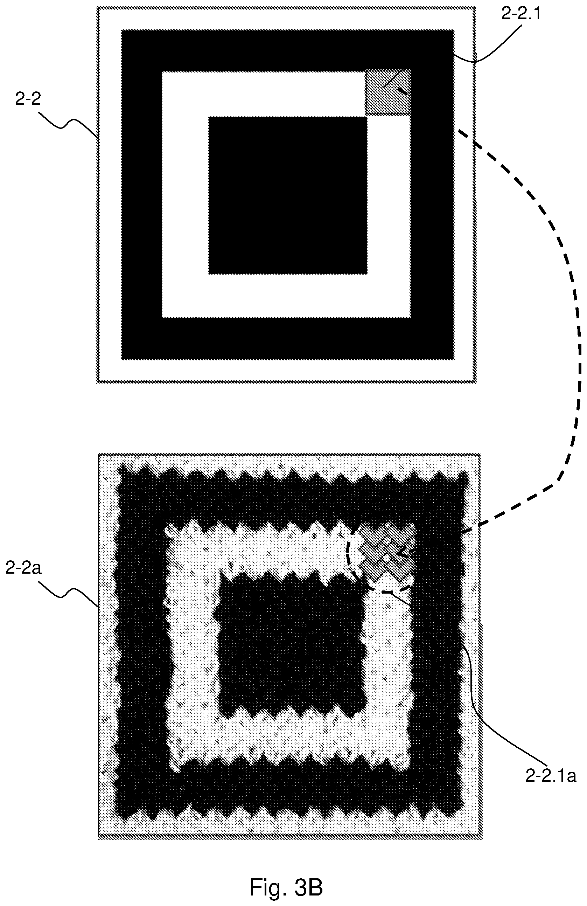

Figure 3B shows, at the top, a reference portion 2-2 indicating the margin of another QR code (not shown in the figure), while it shows at the bottom the respective reference portion 2-2a implemented in weft knitting, wherein a base element 2-2.1a of the portion 2-2a in weft knitting is likewise indicated.

Figure 3B differs from Figure 3A in that the module 2-2.1 of the sample QR code is white in colour (rather than black) and the base element 2-2.1a in weft knitting is likewise white in colour (rather than black).

Furthermore, Figure 3B differs from Figure 3A in that the base element 2-2.1a in weft knitting is composed of a group of stitches having two wales and three courses and thus the structure of the knit within the base element 2-2.1a is composed of 6 adjacent "V-shaped" stitches arranged in three rows (corresponding to the three courses) and two columns (corresponding to the two wales).

Figure 5 shows in greater detail a base element 1-5a of the QR code 10 of the weft knitted fabric that implements each of the black modules of the QR code 10, such as, for example, the black module 1-5a or the alignment module 1-4a of the QR code 10 or the black module 1-2.1 in Figure 3A, in which, it may again be noted, the base element 1-5a is composed of 3 wales and 5 courses.

It is possible to observe that the base element 1-5a is composed of black weft knitted stitches that occupy a central area 1-5a1 of the base element 1-5a which is much larger than the peripheral area 1-5a2 occupied by white weft knitted stitches: in this manner the base element 1-5a is perceived by the human eye as a small black-coloured square and it is correctly detected by standard optical readers and standard software applications for smartphones and tablets. In other words, the base element 1-5a has a high "coverage", wherein the coverage is defined as the prevalence of occupation of the area of the base element by the main colour considered (in this case black).

In particular, the area occupied by the prevalent black portion 1-5a1 of the base element 1-5a is larger than 0.1 square millimetres, it is preferably larger than 0.25 square millimetres, even more preferably it is larger than 1 square millimetre: in this manner the base element 1-5a will be correctly recognised by standard QR code optical readers and the common software applications installed in smartphones or tablets.

The Applicant has carried out various tests, developing single and double knit jacquard fabrics of the tubular type, tubular with a 1x1 reverse side, all needles with a striped reverse side, all needles with a 1x1 reverse side, and with float yarn on the reverse side: the Applicant has successfully verified that the QR code thus implemented in weft knitting is correctly and precisely read (by standard optical readers or with standard mobile device applications) using the following base elements, measured in terms of wales and courses:
- 1 wale, 2 courses, or multiples thereof (i.e. 2 wales, 4 courses; 3 wales, 6 courses; 4 wales, 8 courses, etc.);
- 1 wale, 3 courses, or multiples thereof (i.e. 2 wales, 6 courses; 3 wales, 9 courses, etc.);
- 2 wales, 1 course, or multiples thereof (i.e. 4 wales, 1 course; 6 wales, 3 courses, etc.);
- 2 wales, 3 courses, or multiples thereof (i.e. 4 wales, 6 courses; 6 wales, 9 courses, etc.);
- 2 wales, 4 courses, or multiples thereof (i.e. 4 wales, 8 courses; 6 wales, 12 courses, etc.);
- 2 wales, 5 courses, or multiples thereof (i.e. 4 wales, 10 courses; 6 wales, 15 courses; etc.);
- 3 wales, 2 courses, or multiples thereof (i.e. 6 wales, 4 courses; 9 wales, 6 courses, etc.);
- 3 wales, 4 courses, or multiples thereof (i.e. 6 wales, 8 courses; 9 wales, 12 courses, etc.);
- 3 wales, 5 courses, or multiples thereof (i.e. 6 wales, 10 courses; 9 wales, 15 courses, etc.);
- 4 wales, 2 courses, or multiples thereof (i.e. 8 wales, 4 courses; 12 wales, 6 courses, etc.);
- 4 wales, 3 courses, or multiples thereof (i.e. 8 wales, 6 courses; 12 wales, 9 courses, etc.);
- 4 wales, 5 courses, or multiples thereof (i.e. 8 wales, 10 courses; 12 wales, 15 courses, etc.);
- 5 wales, 3 courses, or multiples thereof (i.e. 10 wales, 6 courses; 15 wales, 9 courses; etc.);
- 5 wales, 4 courses, or multiples thereof (i.e. 10 wales, 8 courses; 15 wales, 12 courses; etc.);
- 6 wales, 5 courses, or multiples thereof (i.e. 12 wales, 10 courses; 18 wales, 15 courses; etc.);
- 6 wales, 7 courses, or multiples thereof (i.e. 12 wales, 14 courses; 18 wales, 21 courses; etc.);
- 7 wales, 5 courses, or multiples thereof (i.e. 14 wales, 10 courses; 21 wales, 15 courses; etc.);
- 7 wales, 6 courses, or multiples thereof (i.e. 14 wales, 12 courses; 21 wales, 18 courses; etc.);
- 7 wales, 8 courses, or multiples thereof (i.e. 14 wales, 16 courses; 21 wales, 24 courses; etc.);
- 7 wales, 9 courses, or multiples thereof (i.e. 14 wales, 18 courses; 21 wales, 27 courses; etc.) ;
- 11 wales, 9 courses, or multiples thereof (i.e. 22 wales, 18 courses; 33 wales, 27 courses; etc.);
- 11 wales, 10 courses, or multiples thereof (i.e. 22 wales, 20 courses; 33 wales, 30 courses; etc.);
- 11 wales, 12 courses, or multiples thereof (i.e. 22 wales, 24 courses; 36 wales, 27 courses; etc.);
- 11 wales, 13 courses, or multiples thereof (i.e. 22 wales, 26 courses; 33 wales, 39 courses; etc.);
- 13 wales, 11 courses, or multiples thereof (i.e. 26 wales, 22 courses; 39 wales, 33 courses; etc.);
- 13 wales, 12 courses, or multiples thereof (i.e. 26 wales, 24 courses; 39 wales, 36 courses; etc.);
- 13 wales, 14 courses, or multiples thereof (i.e. 26 wales, 28 courses; 39 wales, 42 courses; etc.);
- 13 wales, 15 courses, or multiples thereof (i.e. 26 wales, 30 courses; 39 wales, 45 courses; etc.);
- 17 wales, 16 courses, or multiples thereof (i.e. 34 wales, 32 courses; 51 wales, 48 courses; etc.);
- 17 wales, 18 courses, or multiples thereof (i.e. 34 wales, 36 courses; 51 wales, 54 courses; etc.);
- 17 wales, 19 courses, or multiples thereof (i.e. 34 wales, 38 courses; 51 wales, 57 courses; etc.);
- 19 wales, 17 courses, or multiples thereof (i.e. 38 wales, 34 courses; 57 wales, 51 courses, etc.)
- 19 wales, 18 courses, or multiples thereof (i.e. 38 wales, 36 courses; 57 wales, 54 courses, etc.);
- 19 wales, 20 courses, or multiples thereof (i.e. 38 wales, 40 courses; 57 wales, 60 courses, etc.);
- 19 wales, 21 courses, or multiples thereof (i.e. 38 wales, 42 courses; 57 wales, 63 courses, etc.).

More generally, the invention is implemented using weft knitted base elements wherein, for each base element, the number of courses is predefined and it is different from the number of wales, likewise predefined.

In particular, the base element is composed of a defined number of courses different from a defined number of wales, wherein all the base elements making up the QR code implemented on the fabric have the same dimensions in terms of the defined number of courses and wales.

For example, each base element of the weft knitted fabric has a number of courses that is a greater than the number of wales; alternatively, each base element of the weft knitted fabric has a number of courses that is less than the number of wales.

In particular, the invention is implemented using a given proportion between the number of courses and the number of wales of the base element, which means, for example, that the number of courses is two, three or four times the number of wales (or vice versa).

The area occupied by each of the base elements specified above is such to be greater than the minimum area required under the above-mentioned ISO standards for the minimum readable module, namely 0.1 square millimetres.

In particular, the base element composed of 1 wale and 2 courses is the one that has the smallest dimensions: the surface defined by this base element depends on the fineness of the yarn used to implement the base element on the weft knitted fabric.

The Applicant has verified that, by using 22 gauge knitting machines, one obtains the smallest base element (1 wale, 2 courses), wherein the prevalent area (namely the black-coloured area 1-5a1 in Figure 5) has a surface of about 1 square millimetre, which is thus greater than 0.1 square millimetres, thereby enabling a correct reading of the weft knitted QR code.

Furthermore, the Applicant has successfully carried out tests with 7 and 12 gauge knitting machines.

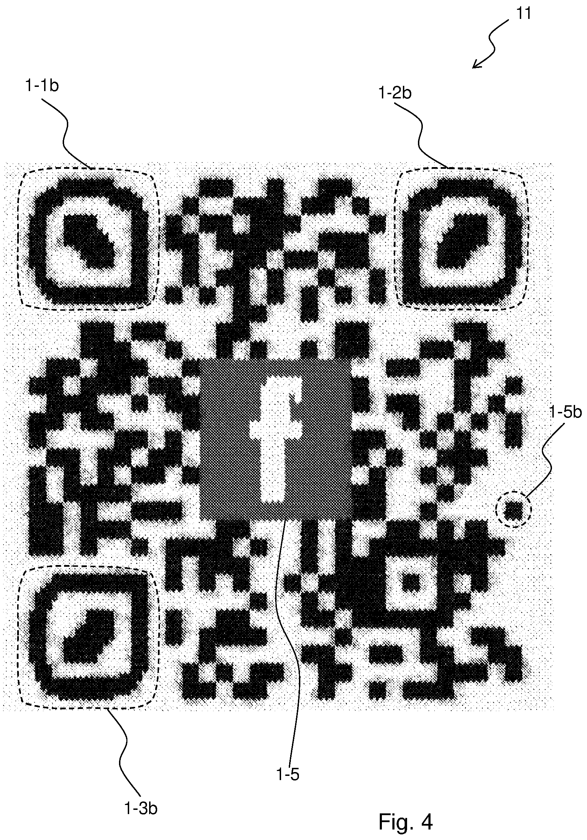

It should be observed that the Applicant has also successfully carried out tests using sample QR codes that have the portions indicating the margins of the QR code with a different shape from the standard one (such as, for example, rounded portions or the like) and which also comprise within them forms of customisation (such as, for example, a logo), as shown for example in Figure 4.

In particular, Figure 4 shows another example of a customised QR code 11 implemented on a fabric weft knitted with mohair yarns, with the addition of a logo and with points of reference having a shape other than square.

In particular, the reference portions indicating the margins of the QR code 11 are indicated with the reference numbers 1-1b, 1-2b, 1-3b, and have a rounded shape, unlike corresponding reference portions 1-1a, 1-2a, 1-3a of the QR code 10 which are perceived as square.

The QR code 11 further comprises, in a central portion, a logo 1-5 representative, for example, of the letter F of Facebook.

The Applicant has successfully performed a reading of the QR code 11 using standard QR code optical readers and also using standard software applications installed in smartphones or tablets: in particular, the optical readers and software applications were able to successfully recognise the three reference portions of the QR code 11 of a rounded shape, 1-1a, 1-2a, 1-3a, and it was possible to correctly reconstruct the portions of the QR code 11 that were missing due to the presence of the logo 1-5.

It should be observed that the invention can also be applied in the event that the number of courses of a base element is equal to the number of wales, depending on the type of yarn used and the structure of the fabric used.

It should be observed that the invention can be implemented both using electronic knitting machines of an industrial type (for example, Shima Seiki SSR 112), and using semi-industrial/mechanical machines, as well as using artisanal/domestic machines and needles for hand knitting/crochet.

In the case of a knitting machine for producing a fabric, it comprises a basement that constitutes the load-bearing structure of the knitting machine, with one or more needle beds that guide a knitting system adapted to activate the up and down movements of a plurality of needles, a yarn feed system adapted to regulate the yarn tension and a fabric pulling system.

The knitting machine further comprises a processing unit (for example, a microcontroller or a microprocessor) configured to suitably control the movement of the needles, in order to obtain the weft knitted QR code.

In one embodiment, the knitting machine is connected to a desktop/laptop computer or a tablet, in order to carry out steps of the method for implementing the weft knitted QR code, in part by means of a suitable software program running on a processing unit of the desktop/laptop computer or tablet and in part by means of a suitable software program running on the processing unit of the knitting machine.

In particular, the processing unit of the desktop/laptop computer or tablet is configured to receive data representative of a sample QR code comprising a plurality of modules having at least two different colours, it is configured to receive data representative of a weft knitted fabric having interlooped stitches arranged in a matrix comprising a plurality of rows and a plurality of columns, wherein the stitches of each row define a course and the stitches of each column define a wale, it is configured to receive data representative of a base element comprising a group of stitches having a defined number of courses different from a defined number of wales, and it is configured to convert each module of the plurality of modules of the sample QR code into a respective base element of the weft knitted fabric, generating therefrom programming data representative of a digital format (for example, a file) of the weft knitted QR code with a combination of a plurality of said base elements.

The processing unit of the knitting machine is configured to receive the programming data (or parameters) and it is configured to generate, as a function of the programming data, a control signal of the knitting system in order to suitably move the needles of the knitting machine to produce the weft knitted QR code by means of a combination of a plurality of base elements, each composed of a group of stitches having a defined number of courses and a defined number of wales, wherein for each base element the defined number of courses is different from the defined number of wales.

The data representative of the sample QR code are for example stored into an internal memory of the desktop/laptop computer or tablet, or a memory external thereto, wherein said data representative of the sample QR code are stored in a configuration (i.e. programming) phase preceding the operating phase of the knitting machine.

Similarly, the data representative of the weft knitted fabric are stored, for example, into the internal or external memory of the desktop/laptop computer or tablet, wherein said data of the knitted fabric are stored in the configuration phase.

Similarly, the data representative of the base element are stored, for example, in the internal or external memory of the desktop/laptop computer or tablet, wherein said data of the base element are stored in the configuration phase.

The programming data representative of the digital format of the weft knitted QR code are for example organised in a file that is received as input by the processing unit of the knitting machine: said file can comprise all the parameters needed by the knitting machine to reproduce the knitted QR code on a mass scale, or it can comprise a part of said parameters, whilst another part of parameters can be configured directly on the knitting machine.

It is also an object of the present invention a computer program that comprises software code portions executed in part on a processing unit of a desktop or laptop computer or of a tablet and in part on a processing unit (for example a microprocessor or microcontroller) of a knitting machine.

The software program running on the processing unit of the desktop or laptop computer or of the tablet carries out the step of generating a sample QR code comprising a plurality of modules having at least two different colours.

Furthermore, the software program running on the processing unit of the desktop or laptop computer or of the tablet carries out the step of defining a base element of a weft knitted fabric in which the interlooped stitches are arranged in a matrix comprising a plurality of rows and a plurality of columns, wherein the stitches of each row define a course and the stitches of each column define a wale, wherein each base element comprises a number of courses different from the number of wales. In other words, the software program running on the processing unit of the desktop or portable computer or of the tablet carries out the step of receiving data representative of a weft knitted fabric having interlooped stitches arranged in a matrix comprising a plurality of rows and a plurality of columns, wherein the stitches of each row define a course and the stitches of each column define a wale, and, furthermore, carries out a step of receiving data representative of a base element comprising a group of stitches having a defined number of courses different from a defined number of wales.

Finally, the software program running on the processing unit of the desktop or portable computer or of the tablet carries out the step of converting each module of the plurality of modules of the sample QR code into a respective base element of the weft knitted fabric, and furthermore carries out the step of generating, as a function of said conversion, programming data representative of a digital format of the QR code implemented in weft knitting with a combination of a plurality of base elements.

The software program running on the processing unit of the knitting machine, by contrast, carries out the step of receiving the programming data and generating, as a function of the programming data, a control signal of a knitting system of the knitting machine so as to suitably move the needles of the knitting machine in order to produce the weft knitted QR code by means of a combination of a plurality of base elements, each composed of a group of stitches having a defined number of courses and a defined number of wales, wherein for each base element the defined number of courses is different from the defined number of wales.

## Claims

1. A method for implementing a knitted Quick Response - QR - code, comprising the steps of:
a) generating a sample QR code (1) comprising a plurality of modules having at least two different colours;
**characterized in that** the method further includes:
b) receiving data representative of a weft knitted fabric having interlooped stitches arranged in a matrix comprising a plurality of rows and a plurality of columns, wherein the stitches of each row define a course and the stitches of each column define a wale;
c) receiving data representative of a base element (1-2.1a; 2-2.1a) comprising a group of stitches having a defined number of courses different from a defined number of wales;
d) implementing each module (1-2.1; 2-2.1) of the plurality of modules of the sample QR code (1) with a respective base element (1-2.1a; 2-2.1a) of a QR code (10) in the weft knitted fabric, thereby implementing the sample QR code (1) with the QR code (10) in the weft knitted fabric with a combination of a plurality of said base elements.

2. The method according to claim 1, wherein for each base element the number of courses is greater than the number of wales, in particular the number of courses is equal to double or triple the number of wales.

3. The method according to claim 1, wherein for each base element the number of courses is lower than the number of wales, in particular the number of wales is equal to double or triple the number of courses.

4. The method according to any one of the preceding claims, wherein the dimensions of each base element of the weft knitted fabric are selected from one of the following list:
- 1 wale, 2 courses, or multiples thereof;
- 1 wale, 3 courses, or multiples thereof;
- 2 wales, 1 course, or multiples thereof;
- 2 wales, 3 courses, or multiples thereof;
- 2 wales, 4 courses, or multiples thereof;
- 2 wales, 5 courses, or multiples thereof;
- 3 wales, 2 courses, or multiples thereof;
- 3 wales, 4 courses, or multiples thereof;
- 3 wales, 5 courses, or multiples thereof;
- 4 wales, 2 courses, or multiples thereof
- 4 wales, 3 courses, or multiples thereof;
- 4 wales, 5 courses, or multiples thereof;
- 5 wales, 3 courses, or multiples thereof;
- 5 wales, 4 courses, or multiples thereof;
- 6 wales, 5 courses, or multiples thereof;
- 6 wales, 7 courses, or multiples thereof;
- 7 wales, 5 courses, or multiples thereof;
- 7 wales, 6 courses, or multiples thereof;
- 7 wales, 8 courses, or multiples thereof;
- 7 wales, 9 courses, or multiples thereof;
- 11 wales, 9 courses, or multiples thereof;
- 11 wales, 10 courses, or multiples thereof;
- 11 wales, 12 courses, or multiples thereof;
- 11 wales, 13 courses, or multiples thereof;
- 13 wales, 11 courses, or multiples thereof;
- 13 wales, 12 courses, or multiples thereof;
- 13 wales, 14 courses, or multiples thereof;
- 13 wales, 15 courses, or multiples thereof;
- 17 wales, 16 courses, or multiples thereof;
- 17 wales, 18 courses, or multiples thereof;
- 17 wales, 19 courses, or multiples thereof;
- 19 wales, 17 courses, or multiples thereof;
- 19 wales, 18 courses, or multiples thereof;
- 19 wales, 20 courses, or multiples thereof;
- 19 wales, 21 courses, or multiples thereof.

5. The method according to any one of the preceding claims, wherein the base element of step c) comprises at least two portions of different colours selected from the at least two colours of the modules of the QR code, wherein the area (1-5a1) occupied by the prevalent colour portion of the base element is greater than 1 square millimetre.

6. The method according to any one of the preceding claims, wherein the fabric is selected from one of the following list:
- tubular jacquard;
- tubular jacquard with 1x1 reverse side;
- all needles jacquard with striped reverse side;
- all needles jacquard with 1x1 reverse side;
- jacquard with float yarn on reverse side.

7. The method according to any one of the preceding claims, wherein steps a), b), c) are carried out by means of a desktop computer or laptop computer or of a tablet and wherein step d) is carried out by means of a computer of a knitting machine.

8. The method according to any one of the preceding claims, wherein the data received in step b) are selected from:
- type of structure of the knitted fabric;
- type of yarn;
- gauge of a knitting machine;
- yarn count;
- yarn colour.

9. Non-transitory computer-readable storage medium comprising instructions that, when executed by a desktop computer or laptop computer or of a tablet, cause the computer to carry out:
- the steps a), b), c) of the method according to claims 1-8;
- a step of implementing each module of the plurality of modules of the sample QR code (1) into a respective base element of the QR code (10) in the weft knitted fabric,
- a step of generating, as a function of said conversion, programming data representative of a digital format of the QR code (10) in a weft knitted fabric to be implemented in weft knitting with a combination of a plurality of the base elements.

10. Non-transitory computer-readable storage medium comprising instructions that, when executed by a computer of a knitting machine, cause the computer to carry out the steps of:
- receiving programming data representative of a digital format of a sample QR code (1) to be implemented in weft knitting with a combination of a plurality of base elements (1-2.1a; 2-2.1a) of a QR code (10) in a weft knitted fabric, each base element comprising a group of stitches having a defined number of courses different from a defined number of wales;
- generating, as a function of the programming data, a control signal of a knitting system of the knitting machine to move a plurality of needles of the knitting machine in order to produce the QR code (10) in the weft knitted fabric by means of a combination of a plurality of base elements.

11. Knitting machine comprising a plurality of needles, a knitting system adapted to activate the up and down movement of the plurality of needles and a processing unit electrically connected to the knitting system,
the processing unit being configured to:
- receive programming data representative of a digital format of a sample QR code (1) to be implemented in weft knitting with a combination of a plurality of base elements (1-2.1a; 2-2.1a) of a QR code (10) in a weft knitted fabric, each base element comprising a group of stitches having a defined number of courses different from a defined number of wales;
- generating, as a function of the programming data, a control signal of the knitting system of the knitting machine to move a plurality of needles of the knitting machine in order to produce the QR code (10) in the weft knitted fabric by means of a combination of a plurality of the base elements.

12. A textile product, in particular a fabric, a clothing item, a clothing accessory, comprising the QR code (10) in the weft knitted fabric implemented according to the method of claims 1-8.

## Patentansprüche

1. Verfahren zur Implementierung eines gestrickten Quick Response - QR - Codes, umfassend die folgenden Schritte:
a) Erzeugen eines Proben-QR-Codes (1), der eine Vielzahl von Modulen mit mindestens zwei verschiedenen Farben umfasst;
**dadurch gekennzeichnet, dass** das Verfahren ferner einschließt:
b) Empfangen von Daten, die für ein Schussgewirk repräsentativ sind, das verschlungene Maschen aufweist, die in einer Matrix angeordnet sind, die eine Vielzahl von Reihen und eine Vielzahl von Spalten umfasst, wobei die Maschen einer jeden Reihe eine Maschenreihe definieren und die Maschen einer jeden Spalte einen Maschenstäbchen definieren;
c) Empfangen von Daten, die für ein Basiselement (1-2.1a; 2-2.1a) repräsentativ sind, das eine Gruppe von Maschen mit einer definierten Anzahl von Maschenreihen umfasst, die sich von einer definierten Anzahl von Maschenstäbchen unterscheidet;
d) Implementieren eines jeden Moduls (1-2.1; 2-2.1) der Vielzahl von Modulen des Proben-QR-Codes (1) mit einem jeweiligen Basiselement (1-2.1a; 2-2.1 a) eines QR-Codes (10) in dem Schussgewirk, wodurch der Proben-QR-Code (1) mit dem QR-Code (10) in dem Schussgewirk mit einer Kombination einer Vielzahl der Basiselemente implementiert wird.

2. Verfahren nach Anspruch 1, wobei für ein jedes Basiselement die Anzahl der Maschenreihen größer als die Anzahl der Maschenstäbchen ist, insbesondere die Anzahl der Maschenreihen gleich der doppelten oder dreifachen Anzahl der Maschenstäbchen ist.

3. Verfahren nach Anspruch 1, wobei für ein jedes Basiselement die Anzahl der Maschenreihen kleiner als die Anzahl der Maschenstäbchen ist, insbesondere die Anzahl der Maschenstäbchen gleich der doppelten oder dreifachen Anzahl der Maschenreihen ist.

4. Verfahren nach einem der vorhergehenden Ansprüche, wobei die Abmessungen eines jeden Basiselements des Schussgewirks aus einer der folgenden Liste ausgewählt werden:
- 1 Maschenstäbchen, 2 Maschenreihen oder ein Vielfaches davon;
- 1 Maschenstäbchen, 3 Maschenreihen oder ein Vielfaches davon;
- 2 Maschenstäbchen, 1 Maschenreihe oder ein Vielfaches davon;
- 2 Maschenstäbchen, 3 Maschenreihen oder ein Vielfaches davon;
- 2 Maschenstäbchen, 4 Maschenreihen oder ein Vielfaches davon;
- 2 Maschenstäbchen, 5 Maschenreihen oder ein Vielfaches davon;
- 3 Maschenstäbchen, 2 Maschenreihen oder ein Vielfaches davon;
- 3 Maschenstäbchen, 4 Maschenreihen oder ein Vielfaches davon;
- 3 Maschenstäbchen, 5 Maschenreihen oder ein Vielfaches davon;
- 4 Maschenstäbchen, 2 Maschenreihen oder ein Vielfaches davon;
- 4 Maschenstäbchen, 3 Maschenreihen oder ein Vielfaches davon;
- 4 Maschenstäbchen, 5 Maschenreihen oder ein Vielfaches davon;
- 5 Maschenstäbchen, 3 Maschenreihen oder ein Vielfaches davon;
- 5 Maschenstäbchen, 4 Maschenreihen oder ein Vielfaches davon;
- 6 Maschenstäbchen, 5 Maschenreihen oder ein Vielfaches davon;
- 6 Maschenstäbchen, 7 Maschenreihen oder ein Vielfaches davon;
- 7 Maschenstäbchen, 5 Maschenreihen oder ein Vielfaches davon;
- 7 Maschenstäbchen, 6 Maschenreihen oder ein Vielfaches davon;
- 7 Maschenstäbchen, 8 Maschenreihen oder ein Vielfaches davon;
- 7 Maschenstäbchen, 9 Maschenreihen oder ein Vielfaches davon;
- 11 Maschenstäbchen, 9 Maschenreihen oder ein Vielfaches davon;
- 11 Maschenstäbchen, 10 Maschenreihen oder ein Vielfaches davon;
- 11 Maschenstäbchen, 12 Maschenreihen oder ein Vielfaches davon;
- 11 Maschenstäbchen, 13 Maschenreihen oder ein Vielfaches davon;
- 13 Maschenstäbchen, 11 Maschenreihen oder ein Vielfaches davon;
- 13 Maschenstäbchen, 12 Maschenreihen oder ein Vielfaches davon;
- 13 Maschenstäbchen, 14 Maschenreihen oder ein Vielfaches davon;
- 13 Maschenstäbchen, 15 Maschenreihen oder ein Vielfaches davon;
- 17 Maschenstäbchen, 16 Maschenreihen oder ein Vielfaches davon;
- 17 Maschenstäbchen, 18 Maschenreihen oder ein Vielfaches davon;
- 17 Maschenstäbchen, 19 Maschenreihen oder ein Vielfaches davon;
- 19 Maschenstäbchen, 17 Maschenreihen oder ein Vielfaches davon;
- 19 Maschenstäbchen, 18 Maschenreihen oder ein Vielfaches davon;
- 19 Maschenstäbchen, 20 Maschenreihen oder ein Vielfaches davon;
- 19 Maschenstäbchen, 21 Gerichte oder ein Vielfaches davon.

5. Verfahren nach einem der vorhergehenden Ansprüche, wobei das Basiselement von Schritt c) mindestens zwei Abschnitte unterschiedlicher Farben umfasst, die aus den mindestens zwei Farben der Module des QR-Codes ausgewählt sind, wobei die Fläche (1-5a1), die von dem vorherrschenden Farbabschnitt des Basiselements eingenommen wird, größer als 1 Quadratmillimeter ist.

6. Verfahren nach einem der vorhergehenden Ansprüche, wobei das Gewebe aus einem der folgenden ausgewählt ist:
- röhrenförmigem Jacquard;
- röhrenförmigem Jacquard mit 1x1 Rückseite;
- Jacquard mit Einsatz aller Nadeln mit gestreifter Rückseite;
- Jacquard mit Einsatz aller Nadeln mit 1x1-Rückseite;
- Jacquard mit Floatgarn auf der Rückseite.

7. Verfahren nach einem der vorhergehenden Ansprüche, wobei die Schritte a), b), c) mittels eines Desktop-Computers oder Laptop-Computers oder eines Tablets ausgeführt werden und wobei Schritt d) mittels eines Computers einer Strickmaschine ausgeführt wird.

8. Verfahren nach einem der vorhergehenden Ansprüche, wobei die in Schritt b) empfangenen Daten ausgewählt werden aus:
- Art der Struktur des Gewirks;
- Garnart;
- Feinheit einer Strickmaschine;
- Garnstärke;
- Garnfarbe.

9. Nichtflüchtiges computerlesbares Speichermedium, das Anweisungen umfasst, die, wenn sie von einem Desktop-Computer oder Laptop-Computer oder von einem Tablet ausgeführt werden, bewirken, dass der Computer Folgendes durchführt:
- die Schritte a), b), c) des Verfahrens nach den Ansprüchen 1-8;
- einen Schritt zum Implementieren eines jeden Moduls der Vielzahl von Modulen des Proben-QR-Codes (1) in ein jeweiliges Basiselement des QR-Codes (10) in dem Schussgewirk,
- einen Schritt zum Erzeugen von Programmierdaten, die für ein digitales Format des QR-Codes (10) in einem Schussgewirk repräsentativ sind, die beim Schussstricken mit einer Kombination einer Vielzahl der Basiselemente implementiert werden soll, in Abhängigkeit der Umwandlung.

10. Nichtflüchtiges computerlesbares Speichermedium, das Anweisungen umfasst, die, wenn sie von einem Computer einer Strickmaschine ausgeführt werden, bewirken, dass der Computer Folgendes durchführt:
- Empfangen von Programmierdaten, die für ein digitales Format eines Proben-QR-Codes (1) repräsentativ sind, der beim Schussstricken mit einer Kombination einer Vielzahl von Basiselementen (1-2.1a; 2-2.1a) eines QR-Codes (10) in einem Schussgewirk implementiert werden soll, wobei ein jedes Basiselement eine Gruppe von Maschen mit einer definierten Anzahl von Maschenreihen umfasst, die sich von einer definierten Anzahl von Maschenstäbchen unterscheidet;
- Erzeugen eines Steuersignals eines Stricksystems der Strickmaschine in Abhängigkeit der Programmierdaten zum Bewegen einer Vielzahl von Nadeln der Strickmaschine, um den QR-Code (10) in dem Schussgewirk mittels einer Kombination einer Vielzahl von Basiselementen zu produzieren.

11. Strickmaschine, umfassend eine Vielzahl von Nadeln, ein Stricksystem, das angepasst ist, um die Auf- und Abbewegung der Vielzahl von Nadeln zu aktivieren, und eine Verarbeitungseinheit, die elektrisch mit dem Stricksystem verbunden ist, wobei die Verarbeitungseinheit zu Folgendem konfiguriert ist:
- Empfangen von Programmierdaten, die für ein digitales Format eines Proben-QR-Codes (1) repräsentativ sind, der beim Schussstricken mit einer Kombination einer Vielzahl von Basiselementen (1-2.1a; 2-2.1 a) eines QR-Codes (10) in einem Schussgewirk implementiert werden soll, wobei ein jedes Basiselement eine Gruppe von Maschen mit einer definierten Anzahl von Maschenreihen umfasst, die sich von einer definierten Anzahl von Maschenstäbchen unterscheidet;
- Erzeugen eines Steuersignals des Stricksystems der Strickmaschine in Abhängigkeit der Programmierdaten zum Bewegen einer Vielzahl von Nadeln der Strickmaschine, um den QR-Code (10) in dem Schussgewirk mittels einer Kombination einer Vielzahl der Basiselementen zu produzieren.

12. Textilprodukt, insbesondere ein Gewebe, ein Kleidungsstück, ein Kleidungszubehör, umfassend den QR-Code (10) in dem Schussgewirk, das nach dem Verfahren der Ansprüche 1-8 implementiert ist.

## Revendications

1. Procédé de mise en œuvre d'un code à réponse rapide - QR - tricoté, comprenant les étapes de :
a) générer un code QR échantillon (1) comprenant une pluralité de modules présentant au moins deux couleurs différentes ;
**caractérisé en ce que** le procédé inclut en outre :
b) recevoir des données représentatives d'un tissu tricoté en trame présentant des mailles imbriquées disposées dans une matrice comprenant une pluralité de rangs et une pluralité de colonnes, dans lequel les mailles de chaque rang définissent une rangée et les mailles de chaque colonne définissent une colonne de mailles ;
c) recevoir des données représentatives d'un élément de base (1-2.1a ; 2-2.1a) comprenant un groupe de mailles présentant un nombre défini de rangées différent d'un nombre défini de colonnes de mailles ;
d) mettre en œuvre chaque module (1-2.1 ; 2-2.1) de la pluralité de modules de code QR échantillon (1) avec un élément de base (1-2.1a ; 2-2.1 a) respectif d'un code QR (10) dans le tissu tricoté en trame, mettant ainsi en œuvre le code QR échantillon (1) avec le code QR (10) dans le tissu tricoté en trame avec une combinaison d'une pluralité desdits éléments de base.

2. Procédé selon la revendication 1, dans lequel, pour chaque élément de base, le nombre de rangées est supérieur au nombre de colonnes de mailles, en particulier le nombre de rangées est égal au double ou au triple du nombre de colonnes de mailles.

3. Procédé selon la revendication 1, dans lequel, pour chaque élément de base, le nombre de rangées est inférieur au nombre de colonnes de mailles, en particulier le nombre de colonnes de mailles est égal au double ou au triple du nombre de rangées.

4. Procédé selon l'une quelconque des revendications précédentes, dans lequel les dimensions de chaque élément de base du tissu tricoté en trame sont choisies dans l'une des listes suivantes :
- 1 colonne de mailles, 2 rangées, ou des multiples de celles-ci ;
- 1 colonne de mailles, 3 rangées, ou des multiples de celles-ci ;
- 2 colonnes de mailles, 1 rangée, ou des multiples de celles-ci ;
- 2 colonnes de mailles, 3 rangées, ou des multiples de celles-ci ;
- 2 colonnes de mailles, 4 rangées, ou des multiples de celles-ci ;
- 2 colonnes de mailles, 5 rangées, ou des multiples de celles-ci ;
- 3 colonnes de mailles, 2 rangées, ou des multiples de celles-ci ;
- 3 colonnes de mailles, 4 rangées, ou des multiples de celles-ci ;
- 3 colonnes de mailles, 5 rangées, ou des multiples de celles-ci ;
- 4 colonnes de mailles, 2 rangées, ou des multiples de celles-ci ;
- 4 colonnes de mailles, 3 rangées, ou des multiples de celles-ci ;
- 4 colonnes de mailles, 5 rangées, ou des multiples de celles-ci ;
- 5 colonnes de mailles, 3 rangées, ou des multiples de celles-ci ;
- 5 colonnes de mailles, 4 rangées, ou des multiples de celles-ci ;
- 6 colonnes de mailles, 5 rangées, ou des multiples de celles-ci ;
- 6 colonnes de mailles, 7 rangées, ou des multiples de celles-ci ;
- 7 colonnes de mailles, 5 rangées, ou des multiples de celles-ci ;
- 7 colonnes de mailles, 6 rangées, ou des multiples de celles-ci ;
- 7 colonnes de mailles, 8 rangées, ou des multiples de celles-ci ;
- 7 colonnes de mailles, 9 rangées, ou des multiples de celles-ci ;
- 11 colonnes de mailles, 9 rangées, ou des multiples de celles-ci ;
- 11 colonnes de mailles, 10 rangées, ou des multiples de celles-ci ;
- 11 colonnes de mailles, 12 rangées, ou des multiples de celles-ci ;
- 11 colonnes de mailles, 13 rangées, ou des multiples de celles-ci ;
- 13 colonnes de mailles, 11 rangées, ou des multiples de celles-ci ;
- 13 colonnes de mailles, 12 rangées, ou des multiples de celles-ci ;
- 13 colonnes de mailles, 14 rangées, ou des multiples de celles-ci ;
- 13 colonnes de mailles, 15 rangées, ou des multiples de celles-ci ;
- 17 colonnes de mailles, 16 rangées, ou des multiples de celles-ci ;
- 17 colonnes de mailles, 18 rangées, ou des multiples de celles-ci ;
- 17 colonnes de mailles, 19 rangées, ou des multiples de celles-ci ;
- 19 colonnes de mailles, 17 rangées, ou des multiples de celles-ci ;
- 19 colonnes de mailles, 18 rangées, ou des multiples de celles-ci ;
- 19 colonnes de mailles, 20 rangées, ou des multiples de celles-ci ;
- 19 colonnes de mailles, 21 rangées, ou des multiples de celles-ci.

5. Procédé selon l'une quelconque des revendications précédentes, dans lequel l'élément de base de l'étape c) comprend au moins deux parties de couleurs différentes choisies parmi les au moins deux couleurs des modules du code QR, dans lequel la zone (1-5a1) occupée par la partie de couleur prédominante de l'élément de base est supérieure à 1 millimètre carré.

6. Procédé selon l'une quelconque des revendications précédentes, dans lequel le tissu est choisi dans l'une des listes suivantes :
- jacquard tubulaire ;
- jacquard tubulaire avec envers 1 x 1 ;
- jacquard en maille unie avec envers rayé ;
- jacquard en maille unie avec envers 1 x 1 ;
- jacquard avec fil flottant sur l'envers.

7. Procédé selon l'une quelconque des revendications précédentes, dans lequel les étapes a), b), c) sont effectuées au moyen d'un ordinateur de bureau ou d'un ordinateur portable ou d'une tablette et dans lequel l'étape d) est effectuée au moyen d'un ordinateur d'une machine à tricoter.

8. Procédé selon l'une quelconque des revendications précédentes, dans lequel les données reçues à l'étape b) sont choisies parmi :
- le type de structure du tissu tricoté ;
- le type de fil ;
- la jauge d'une machine à tricoter ;
- le nombre de fils ;
- la couleur du fil.

9. Support de stockage non transitoire lisible par ordinateur comprenant des instructions qui, lorsqu'elles sont exécutées par un ordinateur de bureau ou un ordinateur portable ou une tablette, amènent l'ordinateur à effectuer :
- les étapes a), b), c) du procédé selon les revendications 1-8 ;
- une étape de mise en œuvre de chaque module de la pluralité de modules du code QR échantillon (1) dans un élément de base respectif du code QR (10) dans le tissu tricoté en trame,
- une étape consistant à générer, en fonction de ladite conversion, des données de programmation représentatives d'un format numérique du code QR (10) dans un tissu tricoté en trame à mettre en œuvre dans le tricotage en trame avec une combinaison d'une pluralité d'éléments de base.

10. Support de stockage non transitoire lisible par ordinateur comprenant des instructions qui, lorsqu'elles sont exécutées par un ordinateur d'une machine à tricoter, amènent l'ordinateur à effectuer les étapes suivantes :
- recevoir des données de programmation représentatives d'un format numérique d'un code QR échantillon (1) à mettre en œuvre dans un tricotage en trame avec une combinaison d'une pluralité d'éléments de base (1-2.1a ; 2-2.1 a) d'un code QR (10) dans un tissu tricoté en trame, chaque élément de base comprenant un groupe de mailles présentant un nombre défini de rangées différent d'un nombre défini de colonnes de mailles ;
- générer, en fonction des données de programmation, un signal de commande d'un système de tricotage de la machine à tricoter pour déplacer une pluralité d'aiguilles de la machine à tricoter afin de produire le code QR (10) dans le tissu tricoté en trame au moyen d'une combinaison d'une pluralité d'éléments de base.

11. Machine à tricoter comprenant une pluralité d'aiguilles, un système de tricotage adapté pour activer le mouvement de haut en bas de la pluralité d'aiguilles et une unité de traitement reliée électriquement au système de tricotage, l'unité de traitement étant configurée pour :
- recevoir des données de programmation représentatives d'un format numérique d'un code QR échantillon (1) à mettre en œuvre dans un tricotage en trame avec une combinaison d'une pluralité d'éléments de base (1-2.1a ; 2-2.1 a) d'un code QR (10) dans un tissu tricoté en trame, chaque élément de base comprenant un groupe de mailles présentant un nombre défini de rangées différent d'un nombre défini de colonnes de mailles ;
- générer, en fonction des données de programmation, un signal de commande du système de tricotage de la machine à tricoter pour déplacer une pluralité d'aiguilles de la machine à tricoter afin de produire le code QR (10) dans le tissu tricoté en trame au moyen d'une combinaison d'une pluralité des éléments de base.

12. Produit textile, en particulier un tissu, un article d'habillement, un accessoire d'habillement, comprenant le code QR (10) dans le tissu tricoté en trame mis en œuvre selon le procédé des revendications 1-8.
